# EUROPÄISCHE PATENTSCHRIFT

(11) **EP 0 894 202 B1**
(45) Veröffentlichungstag und Bekanntmachung des Hinweises auf die Patenterteilung: **02.01.2002**
(21) Anmeldenummer: 97920638.0
(22) Anmeldetag: 10.04.1997
(51) Int. Cl.: F16B 25/10

(54) **SCHRAUBE ZUR BEFESTIGUNG VON METALL- UND/ODER KUNSTSTOFFPROFILEN ODER -PLATTEN AUF EINEM UNTERBAU**
SCREW FOR SECURING METAL AND/OR PLASTIC SECTIONS OR PLATES ON A SUBSTRUCTURE
VIS DE FIXATION DE PROFILES OU DE PLAQUES EN METAL ET/OU EN PLASTIQUE SUR UNE BASE

(30) Priorität: 17.04.1996 DE 19615191
(43) Veröffentlichungstag der Anmeldung: 03.02.1999
(73) Patentinhaber: SFS Industrie Holding AG, 9435 Heerbrugg (CH)
(72) Erfinder: KÖPPEL, Norbert, CH-9434 Au (CH); PALM, Erich, CH-9434 Au (CH)
(74) Vertreter: Ludescher, Hans
(86) Internationale Anmeldenummer: EP9701773
(87) Internationale Veröffentlichungsnummer: WO9739248

(56) Entgegenhaltungen:
- DE-A- 2 157 212
- DE-A- 4 216 198
- DE-U- 9 106 268
- US-A- 5 199 839

## Beschreibung

Die Erfindung betrifft eine Schraube zur drehmomentabhängigen Befestigung von Metall- und/oder Kunststoffprofilen oder -platten auf einem Unterbau, bestehend aus einem Schaft mit einem Bohrabschnitt und einem Gewindeabschnitt sowie einem Angriffsabschnitt zum Ansetzen eines Eindrehwerkzeuges.

Gerade bei der Befestigung von Profilen oder Platten auf einem Unterbau ergeben sich dahingehend Probleme, als diese in einem fest an den Unterbau angepreßten Zustand befestigt werden müssen. Wenn relativ steife Profile oder Platten unter Umständen zusätzlich noch verzogen sind bzw. eine Längsverwindung aufweisen, verstärken sich diese negativen Wirkungen. Diesfalls kann in der Regel nicht mit einem Tiefenanschlag beim Eindrehgerät gearbeitet werden. Selbst beim Einsatz von Drehmomentkupplungen ergeben sich Probleme mit dem Abschaltzeitpunkt, da sich das Drehmoment nach der Auflage des Schraubenkopfes auf dem zu befestigenden Profil entsprechend erhöht und somit die Abschaltung des Eindrehgerätes bewirkt. Ein Abschalten der weiteren Eindrehbewegung erfolgt dann auch unabhängig davon, ob nun das zu befestigende Metall- und/oder Kunststoffprofil oder die -platte auf dem Unterbau aufliegt oder nicht.

Die vorliegende Erfindung hat sich daher zur Aufgabe gestellt, eine Schraube der eingangs genannten Art zu schaffen, bei deren Einsatz das zu befestigende Profil oder die zu befestigende Platte im endgültig gesetzten Zustand auf dem Unterbau satt aufliegt.

Erfindungsgemäß gelingt dies durch eine Schraube zur drehmomentabhängigen Befestigung von Metall- und/oder Kunststoffprofilen oder -platten auf einem Unterbau, bestehend aus einem Schaft mit einem Bohrabschnitt und einem Gewindeabschnitt sowie einem Angriffsabschnitt zum Ansetzen eines Eindrehwerkzeuges, wobei zur besseren Anwendung von Drehmomentkupplungen und Gewährleistung von einem satten Aufliegen/Vorspannung von eventuell verzogenen Profilen oder Platten der an den Angriffsabschnitt anschließende Abschnitt des Schaftes in Richtung zum Angriffsabschnitt hin konisch erweitert ausgeführt ist, und wobei der Durchmesser des angriffsabschnittnahen Endes des konischen Abschnittes des Schaftes größer ist als der Durchmesser des die Schraube aufnehmenden Bohrloches in dem zu befestigenden Profil und somit auch größer als der Bohrdurchmesser des Bohrabschnittes.

Durch diese erfindungsgemäßen Maßnahmen wird bereits beim Eindrehen der Schraube über eine oder mehrere Umdrehungen bewirkt, daß das zu befestigende Metall- und/oder Kunststoffprofil in Richtung zum Unterbau hin vorgespannt und somit gegen den Unterbau hin gedrückt wird. Der konische Abschnitt des Schaftes, welcher auf den Schraubenkopf folgt, bewirkt durch entsprechende Reibung im Bohrloch und durch die konische Ausführung in Einschraubrichtung eine Krafteinwirkung auf das zu befestigende Profil.

Dabei ist es einfach, eine entsprechende Drehmomentkupplung so einzustellen, daß sie erst bei einem entsprechend großen Drehmoment ausgelöst wird. Zu diesem Zeitpunkt ist das zu befestigende Profil aber bereits durch die Wirkung des konisches Abschnittes satt an den Unterbau angepreßt, so daß es nur noch darum geht, das Eindrehwerkzeug beim Erreichen des entsprechenden Drehmomentes abzuschalten.

Durch die Einwirkung des konisches Abschnittes auf die Bohrlochwandung wird zudem noch eine außerordentlich gute Rückdrehsicherung hervorgerufen. Die Oberfläche des konischen Abschnittes befindet sich mit der Bohrlochwandung praktisch in einem Paßsitz, wobei außerdem gerade bei entsprechend verzogenen bzw. verwundenen Profilen die Profile das Bestreben haben, in ihre Ausgangslage zurückzukehren. Dadurch ist immer eine zusätzliche federnde Belastung auf die Schraube vorhanden, die die Rückdrehsicherung speziell im Hinblick auf die Einwirkung des konischen Abschnittes verstärkt.

Es ist an sich klar, daß der Beginn des konischen Abschnittes vom Schaft bzw. von einem gewindefreien Abschnitt des Schaftes ausgehen muß, weil ja dieser konische Abschnitt in das Bohrloch in dem zu befestigenden Profil dem Schaft folgend in einfacher Weise eingeführt werden soll. Daran anschließend ist es aber erforderlich, daß der konische Abschnitt möglichst rasch und wirkungsvoll mit der Wandung des Bohrloches in Eingriff kommt, um dadurch das axiale Vorspannen optimal bewerkstelligen zu können. Es wird also auf einem doch relativ kurzen Bereich des Eindrehens der Schraube das Anzugsmoment und somit die axiale Vorspannung auf das zu befestigende Profil ausgeübt, bevor es zu einer endgültigen Beendigung des Eindrehvorganges der Schraube kommt.

Durch den konischen Abschnitt wird auch bewirkt, daß optimale Befestigungen an einem Unterbau auch dann möglich sind, wenn derselbe gegebenenfalls aus einem dünnen Blech oder anderen dünnen Materialien besteht. Da der konische Abschnitt praktisch den Auslöser für eine entsprechende Erhöhung des Drehmomentes darstellt, kann es nicht zu einem Überdrehen des Gewindes im Unterbau kommen.

Bei einer bekannten Schraube (DE-U-91 06 268) ist zwar unterhalb des Schraubenkopfes ebenfalls ein konischer Abschnitt vorgesehen, welcher jedoch keine besondere Funktion hat. Möglicherweise dient dieser konische Schaftabschnitt zur Zentrierung einer darunter angeordneten Unterlegscheibe oder aber zur Zentrierung in dem hergestellten Bohrloch. Dieser konische Abschnitt kann in keiner Weise mit dem Bohrloch oder mit der Bohrlochwandung in Eingriff gelangen, da mit entsprechenden Räumflügeln ein Bohrloch geschaffen wird, dessen Durchmesser gleich oder grösser ist als der grösste Durchmesser des konischen Schaftabschnittes. Mit dieser bekannten Schraube werden nicht nur grundsätzlich verschiedene Aufgaben gelöst, sondern grundsätzlich verschiedene Wirkungen erzielt und vor allem sind auch grundsätzlich verschiedene bauliche Massnahmen vorhanden.

Es ist bereits eine Schraube bekannt (DE-OS 21 57 212), bei der ein konischer Schaftabschnitt an dem Kopfende des Schaftes zur Bildung einer Verdickung vorgesehen ist, um dadurch dem Schaft zum Ausgleich für eine Eingriffsausnehmung für einen Schraubenzieher eine Verstärkung zu geben. Im übrigen sind an der Unterseite des Kopfes der bekannten Schraube Schneiden vorgesehen, um eine Ausnehmung in das Werkstück hineinzuschneiden und so den Kopf der Schraube in dem Werkstück zu versenken.

Weiters ist eine Befestigungsvorrichtung bekannt (DE-OS 22 38 191), welche stets aus Schraube und Mutter besteht. Die Schraube wird durch das Anziehen der Mutter in eine Bohrung hineingezogen, dreht sich also nicht. Dabei ist der konische Abschnitt der Schraube so bemessen, daß die bei dem Anziehen der Mutter entstehende Reibkraft eine Drehung des Schaftes in dem Loch verhindert. Durch diese Reibung ließe sich ein drehmomentabhängig abschaltbares Eindrehwerkzeug nicht abschalten.

Bei einer anderen bekannten Schraube (DE 40 19 157 C1) ist in dem Bereich des Schraubenkopfes eine Profilierung vorgesehen, die in das Material der Unterlage eingreift, um beim unmittelbaren Kontakt mit der Unterlage das Eindrehmoment der Schraube plötzlich stark zu erhöhen. Diese Wirkung wird bei Schrauben angestrebt, die in einen Unterbau mit geringer Auszugsfestigkeit, wie z.B. Gasbeton, eingeschraubt werden sollen. Bei der erfindungsgemäßen Verwendung einer Schraube wird weder diese Wirkung angestrebt noch eine entsprechende Profilierung eingesetzt. Vielmehr wird die zunehmende Reibung zwischen einem konischen Abschnitt und dem Bohrloch ausgenutzt, um ein Eindrehwerkzeug drehmomentabhängig abzuschalten.

Erfindungsgemäß wird weiter vorgeschlagen, daß der konische Abschnitt des Schaftes bis unmittelbar zum Angriffsabschnitt bzw. zur Unterseite des als Schraubenkopf ausgebildeten Angriffsabschnittes geführt ist. Damit ist gewährleistet, daß das Bohrloch bis zum endgültigen Setzen der Schraube ständig erweitert wird. Dadurch ergibt sich auch ein sich ständig erhöhendes Drehmoment, welches von dem Eindrehwerkzeug mit einer einstellbaren Abschaltreaktion erfaßt werden kann.

Dabei ist auch besonders zu beachten, daß die Abschaltung durch Drehmoment ganz exakt erfolgen muß, da bei einem zu späten Abschalten unter Umständen eine Beschädigung des Gewindeeingriffes im Unterbau erfolgen kann, so daß die Befestigung an sich wieder unwirksam ist.

Ferner kann es vorteilhaft sein, wenn der Durchmesser des angriffsabschnittnahen Endes des konischen Abschnittes des Schaftes größer ist als der Außendurchmesser des Gewindeabschnittes auf dem Schaft. Da die Schraube mit einem Bohrabschnitt versehen ist und sich somit die Durchgangsbohrung in dem zu befestigenden Profil und auch die Bohrung im Unterbau selbst herstellt, wird natürlich auch der Gewindeabschnitt durch das zu befestigende Profil hindurchgedreht. Es ist also in dem Bohrloch des zu befestigenden Profils oder der Platte vorerst ein entsprechendes Gewinde geschnitten, wobei das axiale Vorspannen durch den konischen Abschnitt in dem mit einem Gewinde versehenen Bohrloch des zu befestigenden Profils bewirkt werden soll. Die gebildeten Gewindegänge werden also praktisch durch den konischen Abschnitt wieder zugedrückt bzw. flachgepreßt, wobei dadurch die Reibung des konisches Abschnittes gegenüber der Bohrlochwandung zumindest in den ersten paar Umdrehungen geringer ist als wenn eine glatte Bohrungswandung vorhanden wäre.

Gerade dann, wenn es auf eine exakte Tiefensetzung der Schraube ankommt, d.h. ein als Schraubenkopf ausgebildeter Angriffsabschnitt immer auf der Oberfläche des zu befestigenden Profils bzw. der zu befestigenden Platte exakt aufliegen muß, kann zusätzlich vorgesehen werden, daß der als Schraubenkopf ausgebildete Angriffsabschnitt an seiner Unterseite Erhebungen und/oder Vertiefungen aufweist. Dann ist es möglich, daß die Drehmomentkupplung eines Eindrehwerkzeuges so eingestellt wird, daß sie nicht bereits beim Einwirken des konischen Abschnittes ausgelöst wird, sondern erst dann, wenn plötzlich eine entsprechend starke Drehmomenterhöhung durch die an der Unterseite des Schraubenkopfes vorgesehenen Erhebungen und/oder Vertiefungen bewirkt wird, wenn also der Schraubenkopf auf dem zu befestigenden Profil bzw. der zu befestigenden Platte vollflächig zur Anlage kommt. Durch die vorangegangene Wirkung des konischen Abschnittes ist das zu befestigende Profil bzw. die zu befestigende Platte bereits satt an den Unterbau angepreßt, so daß es dann nur noch darum geht, das Eindrehwerkzeug durch eine entsprechend massive Drehmomenterhöhung abzuschalten.

Weitere erfindungsgemäße Merkmale und besondere Vorteile werden in der nachstehenden Beschreibung anhand der Zeichnungen noch näher erläutert. Es zeigen:

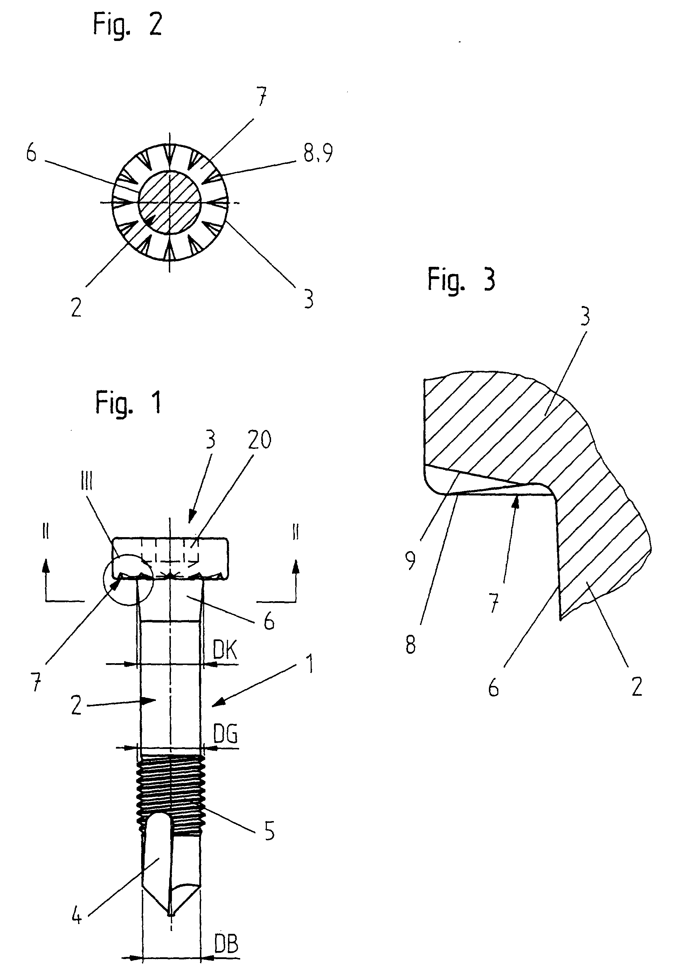

- Fig. 1: eine Ansicht der erfindungsgemäßen Schraube;
- Fig. 2: einen Schnitt nach der Linie II-II in Fig. 1;
- Fig. 3: einen Schnitt durch einen in Fig. 1 mit III bezeichneten Abschnitt der Schraube;
- Fig. 4: einen Schnitt durch einen Befestigungseinsatz der erfindungsgemäßen Schraube, wo also Profile an einem festen Unterbau zu befestigen sind;
- Fig. 5: eine Teilansicht der Schraube beim Eindrehvorgang mit dem durchdrungenen Abschnitt des zu befestigenden Profils;
- Fig. 6: eine Teilansicht der Schraube im fertig gesetzten Zustand, wobei der die Schraube unmittelbar umgebende Abschnitt des zu befestigenden Profils ebenfalls gezeigt ist.

Die erfindungsgemäße Schraube 1 besteht aus einem Schaft 2 und einem als Schraubenkopf 3 ausgebildeten Angriffsabschnitt. Der Schaft 2 weist an seinem einen Ende einen Bohrabschnitt 4 auf und ist ferner mit einem Gewindeabschnitt 5 versehen. Der an den Schraubenkopf 3 anschließende Abschnitt 6 des Schaftes 2 ist in Richtung zum Schraubenkopf 3 hin konisch erweitert ausgeführt. Der Schraubenkopf 3 ist an seiner Unterseite 7 mit Erhebungen 8 und/oder Vertiefungen 9 versehen. Die Erhebungen 8 und/oder Vertiefungen 9 können in Form von Rippen, Nuten, wellenförmigen Rippen, Aufrauhungen, einzelnen Spitzen, sägezahnförmigen Rippen oder dergleichen ausgeführt werden. Es geht darum, beim Eindrehen der Schraube eine sich ständig und gegebenenfalls plötzlich extrem erhöhende Drehmomentbelastung zu erzeugen, die zum richtigen Zeitpunkt ein Abschalten des Eindrehwerkzeuges mit einer entsprechenden Drehmomentkupplung bewirkt. Ob diese Drehmomentkupplung mechanisch oder elektronisch reagiert oder ob eine hydraulische Steuereinrichtung verwendet wird, ist dabei ohne Belang.

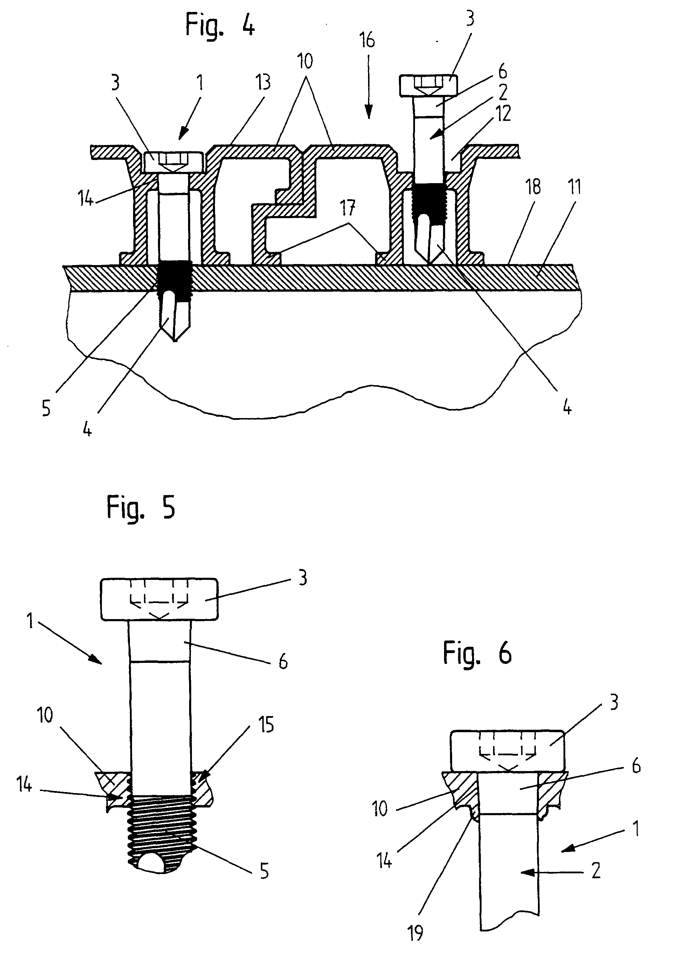

Der konische Abschnitt 6 des Schaftes 2 ist bis unmittelbar zur Unterseite 7 des Schraubenkopfes 3 geführt. Der Durchmesser DK des schraubenkopfnahen Endes des konisches Abschnittes 6 ist größer ausgeführt als der Durchmesser des die Schraube 1 aufnehmenden Bohrloches 14 in dem zu befestigenden Profil 10. Demnach ist der Durchmesser DK natürlich auch größer als der Bohrdurchmesser DB des Bohrabschnittes 4. Um eine entsprechende optimale Wirkung zu erreichen, ist der Durchmesser DK des schraubenkopfnahen Endes des konischen Abschnittes 6 größer ausgeführt als der Außendurchmesser DG des Gewindeabschnittes 5 auf dem Schaft 2. Die Schraube 1 dient zur Befestigung von Profilen 10 auf einem Unterbau 11, wie dies z.B. der Fig. 4 entnommen werden kann. Bei der vorliegenden Darstellung werden Metallprofile, beispielsweise Aluminiumprofile, auf einem Unterbau 11, welcher ebenfalls aus Metallprofilen, z.B. Aluminium- oder Stahlprofilen, gebildet ist, befestigt. In den zu befestigenden Profilen 10 können entsprechende Ausnehmungen oder Längsnuten 12 vorgesehen sein, wobei in den Nuten 12 die Befestigung erfolgt. Die Schraubenköpfe 3 sind dadurch im fertig gesetzten Zustand gegenüber der Außenoberfläche 13 versenkt angeordnet. Eine erfindungsgemäß ausgestaltete Schraube kann aber durchaus auch zur Befestigung von Kunststoffprofilen auf einem entsprechenden Unterbau 11 aus Kunststoffprofilen oder aber aus Metallprofilen eingesetzt werden.

Wie gerade aus Fig. 4 und den Fig. 5 und 6 ersichtlich ist, wird beim Eindrehen einer Schraube 1 vorerst mittels des Bohrabschnittes 4 ein Bohrloch 14 in dem zu befestigenden Profil 10 hergestellt. Der auf den Bohrabschnitt 4 folgende Gewindeabschnitt 5 formt dann ein entsprechendes Gewinde 15 in das Bohrloch 14 des zu befestigenden Profils 10. Daraufhin kommt der Bohrabschnitt 4 mit dem Unterbau 11 in Kontakt und bohrt dort ein entsprechendes Loch, in welches sich dann wiederum der Gewindeabschnitt 5 einformen kann. Im festen Unterbau 11 bewirkt der Gewindeabschnitt 5 eine entsprechende mechanische Befestigung. Unmittelbar nach der Herstellung des Bohrloches im festen Unterbau 11 kommt der konische Abschnitt 6 am schraubenkopfnahen Ende des Schaftes 2 zum Einsatz, wobei sich der konische Abschnitt 6 an die Wandung des Bohrloches 14 bzw. an das im Bohrloch 15 hergestellte Gewinde 15 anpreßt. Durch die konische Ausführung des Abschnittes 6 wird das zu befestigende Profil 10 während des Eindrehvorganges der Schraube in Eindrehrichtung 16 vorgespannt, so daß die unteren Abschnitte 17 der zu befestigenden Profile 10 fest gegen die Oberseite 18 des Unterbaues 11 angepreßt werden. Es ergibt sich also in Achsrichtung ein entsprechendes Anzugsmoment, so daß die zu befestigenden Profile 10 immer sicher und satt gegen den festen Unterbau 11 angepreßt werden und auf diesem aufliegen. Auch wenn die Profile 10 gegebenenfalls verzogen oder verwunden sind, wird eine ordnungsgemäße Anlage der Profile bewirkt.

Aus Fig. 6 ist zudem ersichtlich, daß sich durch die Einwirkung des konischen Abschnittes 6 an der Unterseite des Bohrloches 14 eine Materialauspressung ergeben kann, so daß praktisch eine umlaufende Nase 19 gebildet wird. Durch die Materialverdrängung des konischen Abschnittes 6 ergibt sich je nach Material des zu befestigenden Profils 10 eine kleinere oder größere oder aber überhaupt keine Ausformung.

Bei einer solchen Anwendungsart - wo also auf eine exakte Tiefensetzung zu achten ist - muß lediglich gewährleistet sein, daß durch den eingesetzten konischen Abschnitt eine entsprechende Anzugswirkung hervorgerufen und durch den Einsatz der Unterseite des Schraubenkopfes mit den entsprechenden Erhebungen und/oder Vertiefungen eine plötzliche Drehmomenterhöhung bewirkt wird.

Es wäre auch denkbar, daß der konische Abschnitt 6 nicht unmittelbar bis zur Unterseite 7 des Schraubenkopfes geführt ist, sondern daß an diesen konischen Abschnitt 6 beispielsweise ein kurzer zylindrischer Abschnitt anschließt, welcher dann in die Unterseite 7 des Schraubenkopfes 3 übergeht. Eine entsprechende Materialaufnahme durch die Anpressung des konischen Abschnittes 6 wäre möglich, wenn an der Unterseite 7 des Schraubenkopfes 3 eine umlaufende Nut vorhanden wäre. Es ist dann trotzdem noch möglich, auf einem entsprechenden ringförmigen Bereich an der Unterseite 7 des Schraubenkopfes 3 Erhebungen und/ oder Vertiefungen vorzusehen, damit die notwendige plötzliche Drehmomenterhöhung stattfinden kann.

In der Zeichnung ist von einer Schraube mit einem zylindrischen Schraubenkopf 3 ausgegangen worden. In diesem Schraubenkopf ist eine mittige Öffnung 20 zum Einsatz eines Schraubwerkzeuges vorgesehen. Es wäre im Rahmen der Erfindung durchaus denkbar, auf die erfindungsgemäße Art und Weise auch Schrauben mit einem entsprechenden Außenangriff und anstelle des zylinderförmigen Schraubenkopfes 3 einen als Senkkopf ausgeführten Schraubenkopf auszubilden.

Falls es nicht auf eine exakte Tiefensetzung einer Schraube ankommt, d.h. wenn solche Schrauben nach einer entsprechenden Setzung durch Verkleidungselemente oder dergleichen abgedeckt werden oder wenn bei einem Eindrehwerkzeug exakte Einstellmöglichkeiten vorhanden sind, die beim Auftreffen einer glatten Unterseite eines Schraubenkopfes ein plötzliches Abschalten des Eindrehwerkzeuges hervorrufen können, dann sind an der Unterseite des Schraubenkopfes keine Erhebungen und/oder Vertiefungen notwendig.

Wenn es für das Setzen der Schraube einfach ausreicht, ein entsprechend hohes Drehmoment aufzubauen, um das Eindrehwerkzeug anzuschalten, genügt auch allein der konische Abschnitt 6, so daß es also gar keines Schraubenkopfes bedarf. Dann ist einfach ein entsprechender Angriffsabschnitt auszubilden, wobei dieser Angriffsabschnitt sowohl als Innen- als auch als Außenangriff ausgebildet sein könnte. Beispielsweise wäre es denkbar, solche Schrauben mit einem Außensechskant oder einem Innensechskant bzw. anderen Innen- oder Außenangriffen auszugestalten. Die Angriffsabschnitte können diesfalls im Durchmesser gleich oder kleiner oder auch geringfügig größer sein als das entsprechende Ende des konischen Abschnittes 6.

Durch die große Drehmomenterhöhung beim Eingreifen des konischen Abschnittes ist mit Sicherheit gewährleistet, daß ein Abschalten des Eindrehwerkzeuges erfolgt, bevor eine eventuelle Beschädigung des Gewindes im Unterbau stattfindet, so daß eine erfindungsgemäße Schraube auch in vorteilhafter Weise bei dünnen Blechen oder überhaupt bei einem Unterbau aus dünnem Material eingesetzt werden kann. Durch den konischen Abschnitt ist auch eine entsprechende Rückdrehsicherung gewährleistet.

## Patentansprüche

1. Schraube (1) zur drehmomentabhängigen Befestigung von Metall- und/oder Kunststoffprofilen oder -platten auf einem Unterbau, bestehend aus einem Schaft (2) mit einem Bohrabschnitt (4) und einem Gewindeabschnitt (5) sowie einem Angriffsabschnitt zum Ansetzen eines Eindrehwerkzeuges, wobei zur besseren Anwendung von Drehmomentkupplungen und Gewährleistung von einem satten AufliegenNorspannen von eventuell verzogenen Profilen oder Platten der an den Angriffsabschnitt anschließende Abschnitt (6) des Schaftes (2) in Richtung zum Angriffsabschnitt hin konisch erweitert ausgeführt ist, und wobei der Durchmesser (DK) des angriffsabschnittnahen Endes des konischen Abschnittes (6) des Schaftes (2) größer ist als der Bohrdurchmesser (DB) des Bohrabschnittes (4) der Schraube (1).

2. Schraube nach Anspruch 1, **dadurch gekennzeichnet, daß** der konische Abschnitt (6) des Schaftes (2) bis unmittelbar zum Angriffsabschnitt bzw. zur Unterseite (7) des als Schraubenkopf (3) ausgebildeten Angriffsabschnittes geführt ist.

3. Schraube nach Anspruch 1, **dadurch gekennzeichnet, daß** der Durchmesser (DK) des angriffsabschnittnahen Endes des konischen Abschnittes (6) des Schaftes (2) größer ist als der Außendurchmesser (DG) des Gewindeabschnittes (5) auf dem Schaft (2).

4. Schraube nach Anspruch 1, **dadurch gekennzeichnet, daß** der als Schraubenkopf (3) ausgebildete Angriffsabschnitt an seiner Unterseite (7) Erhebungen (8) und/oder Vertiefungen (9) aufweist.

## Claims

1. A screw (1) for the torque-dependent fastening of metal and/or plastics profiles or panels to a substructure, comprising a shank (2) having a drilling portion (4), threaded portion (5) and an engagement portion for the application of a screwing-in implement, wherein for better utilisation of torque couplings and to ensure full contact/preloading of possibly distorted profiles or panels the portion (6) of the shank (2) adjacent the engagement portion is formed conically widened towards the engagement portion, and wherein the diameter (DK) of the end of the conical portion (6) of the shank (2) near the engagement portion is larger than the drilling diameter (DB) of the drilling portion (4) of the screw (1).

2. A screw according to Claim 1, **characterised in that** the conical portion (6) of the shank (2) extends right up to the engagement portion or up to the underside (7) of the engagement portion in the form of a screw head (3).

3. A screw according to Claim 1, **characterised in that** the diameter (DK) of the end of the conical portion (6) of the shank (2) near the engagement portion is larger than the outer diameter (DG) of the threaded portion (5) on the shank (2).

4. A screw according to Claim 1, **characterised in that** on its underside (7) the engagement portion in the form of a screw head (3) has projections (8) and/or recesses (9).

## Revendications

1. Vis (1) pour fixer, en fonction du couple, du profilé ou des plaques de métal ou de matière plastique sur une infrastructure, composée d'une tige (2) comprenant une partie de forage (4) et une partie de taraudage (5) ainsi qu'une partie de saisie pour montage d'un outil de mise en rotation,
**caractérisée en ce que**
pour mieux utiliser des coupleurs et pour garantir une application et un serrage de profilés et de plaques éventuellement voilés, la partie (6) de la tige (2) faisant suite à la partie de saisie s'élargit en cône en direction de cette partie de saisie, le diamètre (DK) de l'extrémité de cette partie conique (6) du côté de la partie de saisie étant supérieur au diamètre (DB) de la partie de forage (4) de la vis (1).

2. Vis selon la revendication 1,
**caractérisée en ce que**
la partie conique (6) de la tige (2) s'étend directement jusqu'à la partie de saisie ou la face inférieure (7) de la tête de vis (3) constituant cette partie de saisie.

3. Vis selon la revendication 1,
**caractérisée en ce que**
le diamètre (DK) de l'extrémité jouxtant la partie de saisie, de la partie conique (6) de la tige (2) est supérieur au diamètre extérieur (DG) de la partie filetée (5) de la tige (2).

4. Vis selon la revendication 1,
**caractérisée en ce que**
la partie de saisie, constituée par une tête de vis (3), présente sur sa face inférieure (7) des parties en relief (8) et/ou des parties en creux (9).
